# EUROPÄISCHE PATENTSCHRIFT

(11) **EP 2 850 674 B1**
(45) Veröffentlichungstag und Bekanntmachung des Hinweises auf die Patenterteilung: **29.03.2023**
(21) Anmeldenummer: 13723012.4
(22) Anmeldetag: 23.04.2013
(51) Int. Cl.: H01M 50/502, H01M 50/521

(54) **VERFAHREN ZUM VERBINDEN ZWEIER AUS UNGLEICHEN MATERIALIEN BESTEHENDEN BATTERIEPOLEN ZWEIER BATTERIEZELLEN SOWIE BATTERIEEINHEIT**
METHOD FOR CONNECTING TWO BATTERY POLES, WHICH CONSIST OF UNIDENTICAL MATERIALS, OF TWO BATTERY CELLS, AND BATTERY UNIT
PROCÉDÉ POUR RELIER DEUX PÔLES DE DEUX CELLULES DE BATTERIE CONSTITUÉS DE MATÉRIAUX DIFFÉRENTS AINSI QU'UNITÉ DE BATTERIE

(30) Priorität: 18.05.2012 DE 102012208352
(43) Veröffentlichungstag der Anmeldung: 25.03.2015
(73) Patentinhaber: Robert Bosch GmbH, 70442 Stuttgart (DE)
(72) Erfinder: RAMSAYER, Reiner, 71277 Rutesheim (DE)
(86) Internationale Anmeldenummer: PCT/EP2013/058345
(87) Internationale Veröffentlichungsnummer: WO 2013/171035

(56) Entgegenhaltungen:
- WO-A1-2012/050173
- DE-A1-102009 046 505
- US-A- 5 662 497
- US-A1- 2005 153 194
- US-A1- 2011 064 993
- US-A1- 2013 012 079

## Beschreibung

### Stand der Technik

Die Erfindung betrifft ein Verfahren zum Verbinden zweier aus ungleichen Materialien bestehenden Batteriepolen zweier Batteriezellen nach dem Oberbegriff des Anspruchs 1. Ferner betrifft die Erfindung eine Batterieeinheit mit miteinander verbundenen Batteriezellen nach dem Oberbegriff des Anspruchs 3.

Ein derartiges Verfahren bzw. eine derartige Batterieeinheit sind aus der DE 10 2009 046 505 A1 bekannt. Bei dem bekannten Verfahren bzw. dessen Batterieeinheit ist es vorgesehen, dass der Pol einer ersten Batteriezelle mit dem Pol einer zweiten Batteriezelle unmittelbar mittels einer stoff-, kraft- oder formschlüssigen Verbindung miteinander verbunden ist. Dabei bestehen die beiden Pole der beiden Batteriezellen aus ungleichen Materialien, wobei die Materialien insbesondere Kupfer und Aluminium sind. Als Verbindungsmethode werden Schweißverfahren sowie Durchsetzfügeverfahren oder alternativ eine Verschraubung der beiden Batteriepole vorgeschlagen.

Lithium-Ionen-Batterien, wie sie heutzutage insbesondere für den Einsatz in Hybridfahrzeugen als Energiequelle zum Antreiben eines Antriebsmotors vorgesehen sind, weisen konstruktionsbedingt Batteriepole aus unterschiedlichen Materialien auf. Beim Verbinden ungleichpoliger Batteriepole ergibt sich daher die Problematik, dass insbesondere ein aus Kupfer bestehender Batteriepol mit einem aus Aluminium bestehenden Batteriepol verbunden werden muss. Aufgrund der üblicherweise aus einer Vielzahl von einzelnen Batteriezellen bestehenden Batterieeinheit besteht der Wunsch nach einem möglichst kostengünstigen und zuverlässigen, sowie einen geringen Übergangswiderstand bietenden Verbindungsverfahren zwischen den Polen der Batteriezellen. Bei dem aus der genannten Schrift bekannten Verfahren besteht jedoch die Problematik, dass ein Schweißen aus unterschiedlichen Materialien bestehenden Batteriepolen aufgrund einer intermetallischen Phase im Schweißbereich der beiden Pole prozesstechnisch relativ schwierig zu beherrschen ist. Darüber hinaus ist die Übergangsstelle zwischen dem Aluminium und dem Kupfer aufgrund des stark unterschiedlichen elektrochemischen Potenzials starken korrosiven Angriffen ausgesetzt. Insbesondere wenn die Verbindungsstelle im unmittelbaren Bereich des sogenannten Terminals im Gehäusebereich einer Batteriezelle liegt, besteht daher die Gefahr, dass aufgrund der Umgebungsbedingungen infolge von Luftfeuchtigkeit oder ähnlichem das Terminal zur Korrosion neigt. In der Praxis werden daher derartige Übergangsstellen zwischen dem Terminal und dem Gehäusebereich durch zusätzliche Schutzmaßnahmen wie Dichtungen oder ähnlichem, geschützt. Zusammengefasst bedeutet dies, dass eine Schweißverbindung zwischen zwei aus unterschiedlichen Materialien bestehenden Batteriepolen schwierig herzustellen ist sowie einen relativ hohen Zusatzaufwand erforderlich macht, um die Verbindungsstelle gegenüber äußeren Einflüssen, insbesondere gegenüber Korrosionseinflüssen, zu schützen.

### Offenbarung der Erfindung

Ausgehend von dem dargestellten Stand der Technik liegt der Erfindung die Aufgabe zugrunde, ein Verfahren zum Verbinden zweier aus ungleichen Materialien bestehenden Batteriepolen zweier Batteriezellen nach dem Oberbegriff des Anspruchs 1 derart weiterzubilden, dass eine prozesstechnisch sichere Verbindung unter Einbeziehung möglichst weniger zusätzlicher Bauteile zwischen den Batteriepolen ermöglicht wird. Diese Aufgabe wird erfindungsgemäß bei einem Verfahren nach dem Anspruch 1 dadurch gelöst, dass die beiden Batteriepole in einem Verbindungsbereich zumindest mittelbar mittels einer Magnetimpuls-Schweißverbindung, miteinander verbunden werden. Ein derartiges Verfahren ermöglicht eine zuverlässige Verbindung zwischen den aus unterschiedlichen Materialien bestehenden Batteriepolen mit einem relativ geringen Übergangswiderstand. Darüber hinaus ist der Verbindungsprozess relativ einfach überwach- und steuerbar, so dass im Serieneinsatz, bei dem innerhalb einer relativ kurzen Zeit eine Vielzahl von Verbindungen zwischen den Batteriepolen hergestellt werden muss, das Verfahren wirtschaftlich vorteilhaft einsetzbar ist.

Vorteilhafte Weiterbildungen des erfindungsgemäßen Verfahrens sowie einer nach dem erfindungsgemäßen Verfahren ausgebildeten Batterieeinheit sind in den jeweiligen Unteransprüchen aufgeführt. In den Rahmen der Erfindung fallen sämtliche Kombinationen aus zumindest zwei von in den Ansprüchen, der Beschreibung und/oder den Figuren offenbarten Merkmalen.

Das erfindungsgemäße Verfahren ermöglicht es, die Verbindung zwischen den beiden Batteriepolen entweder als reine Crimpverbindung, als reine Schweißverbindung, oder als eine Mischform zwischen einer Crimpverbindung und einer Schweißverbindung auszubilden. Damit wird eine optimale Anpassung des Verbindungsprozesses an den jeweiligen Anwendungsfall ermöglicht. So ist es beispielsweise denkbar, durch eine entsprechende Formgebung der Batteriepole die Verbindung als reine Crimpverbindung auszubilden. Wenn bei einer entsprechenden Formgebung der Batteriepole jedoch eine Formschluss- bzw. Crimpverbindung nicht sichergestellt werden kann, kann die Verbindung auch als reine (Kalt-) Schweißverbindung ausgebildet werden. Bei einer entsprechenden Parameterwahl der Fertigungseinrichtung ist es selbstverständlich auch denkbar, sowohl eine Crimp- als auch eine Schweißverbindung gleichzeitig im Verbindungsbereich auszubilden.

Bei einer Batterieeinheit, bei denen die Batteriepole wenigstens zweier Batteriezellen nach einem erfindungsgemäßen Verfahren miteinander verbunden sind, ist es vorgesehen, dass in dem Verbindungsbereich der eine, erste Batteriepol eine Aufnahme für einen Endbereich des anderen, zweiten Batteriepols aufweist, , und dass die Aufnahme des ersten Batteriepols den zweiten Batteriepol zumindest bereichsweise, vorzugsweise radial, umfasst.

Besonders bevorzugt ist es, wenn der erste Batteriepol, zumindest im Verbindungsbereich aus einem gegenüber dem Material des zweiten Batteriepols weicheren Materials besteht. Dadurch wird bereits bei einem relativ geringen Energieeintrag der Fertigungseinrichtung eine entsprechende Deformation des äußeren, aus weicherem Material bestehenden Batteriepols ermöglicht.

Ganz besonders bevorzugt ist es, wenn der zweite Batteriepol in dem mit der Aufnahme zusammenwirkenden Bereich eine Formschlussgeometrie, insbesondere in Form einer Rändelung oder Riffelung, aufweist. Durch eine derartige Formschlussgeometrie wird eine besonders feste bzw. zuverlässige Verbindung zwischen den Batteriepolen ermöglicht. Darüber hinaus bewirkt die Rändelung einer Vergrößerung der Kontaktoberfläche zwischen den beiden Batteriepolen. Dadurch wird eine Verminderung des elektrischen Übergangswiderstands im Verbindungsbereich der beiden Batteriepole ermöglicht.

Um mögliche Korrosionserscheinungen durch die unterschiedlichen Materialien zu minimieren bzw. auszuschließen, ist es darüber hinaus bevorzugt vorgesehen, dass zumindest einer der beiden Batteriepole zumindest im Verbindungsbereich mit einer vorzugsweise korrosionshemmenden Beschichtung, insbesondere enthaltend Kunststoff, Metall oder Keramik, versehen ist. Es kann alternativ oder zusätzlich auch eine metallische Beschichtung an zumindest einem der Batteriepole im Verbindungsbereich vorgesehen sein, um die elektrischen Eigenschaften bzw. den Übergangswiderstand zu optimieren.

In einer konstruktiven Ausgestaltung zur Ausbildung der Verbindung ist es vorgesehen, dass der erste Batteriepol im Verbindungsbereich eine vorzugsweise aus Aluminium bestehende Kappe aufweist bzw. kappenförmig ausgebildet ist. Eine derartige Ausbildung eines Batteriepols als Kappe hat den Vorteil, dass in dessen Innenraum die Aufnahme für den zweiten Batteriepol ausgebildet ist. Dabei kann es vorgesehen sein, dass der erste Batteriepol zusammen mit der Kappe als einstückiges Bauteil ausgebildet ist, so dass weitere Verbindungselemente bzw. Verbindungen zwischen dem ersten Batteriepol und der Kappe nicht erforderlich sind.

Weitere Vorteile, Merkmale und Einzelheiten der Erfindung ergeben sich aus der nachfolgenden Beschreibung bevorzugter Ausführungsbeispiele sowie anhand der Zeichnung.

Diese zeigt in:
- Fig. 1: eine vereinfachte Darstellung einer aus mehreren Batteriezellen bestehenden Batterieeinheit,
- Fig. 2: den Verbindungsbereich zweier Batteriepole zweier Batteriezellen in einem Längsschnitt vor der Ausbildung der Verbindung,
- Fig. 3: der Verbindungsbereich gemäß Fig. 2 nach dem Ausbilden der Verbindung mittels eines Magnetimpuls-Schweißverfahrens, ebenfalls im Längsschnitt und
- Fig. 4 und Fig. 5: jeweils abgewandelte nicht-erfindungsgemäße Ausführungsformen unter Verwendung separater Bauteile zur Ausbildung der Aufnahme für einen Batteriepol in Längsschnitten.

Gleiche Elemente bzw. Elemente mit gleicher Funktion sind in den Figuren mit den gleichen Bezugsziffern versehen.

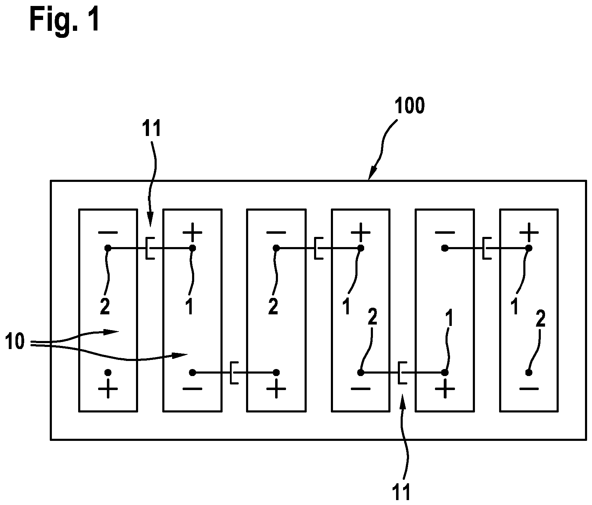

In der Fig. 1 ist stark vereinfacht eine Batterieeinheit 100, bestehend aus einer Vielzahl von miteinander verbundenen Batteriezellen 10 dargestellt. In der Fig. 1 sind der Einfachheit halber lediglich sechs miteinander verbundene Batteriezellen 10 dargestellt, in der Praxis kann eine derartige Batterieeinheit 100 jedoch auch aus mehr als sechs Batteriezellen 10 bestehen. Eine derartige Batterieeinheit 100 findet bevorzugt, jedoch nicht einschränkend, Verwendung in einem Kraftfahrzeug, insbesondere als Bestandteil eines Hybridantriebes. Ferner handelt es sich bei den Batteriezellen 10 insbesondere um Lithium-lonen-Batteriezellen 10 mit jeweils einem Pluspol 1 und einem Minuspol 2. Im dargestellten Ausführungsbeispiel sind alle sechs Batteriezellen 10 elektrisch in Reihe geschaltet, so dass sich deren einzelne Batteriespannungen addieren. Selbstverständlich liegt es auch im Rahmen der Erfindung, dass die Batteriezellen 10, zumindest teilweise, elektrisch parallel geschaltet sind.

Charakteristisch für als Lithium-Ionen-Batteriezellen 10 ausgebildete Batteriezellen 10 ist es, dass das Material des Pluspols 1 und das Material des Minuspols 2, welche zur elektrischen Verbindung bzw. Kontaktierung dienen, aus unterschiedlichen Materialien bestehen. Insbesondere besteht ein Pol einer Batteriezelle 10 aus Aluminium, während der andere Pol der Batteriezelle 10 aus Kupfer besteht. Die Verbindung des Pluspols 1 einer ersten Batteriezelle 10 mit einem Minuspol 2 einer zweiten Batteriezelle 10 erfolgt erfindungsgemäß durch die Verwendung einer Magnetimpuls-Schweißverbindung in einem Verbindungsbereich 11.

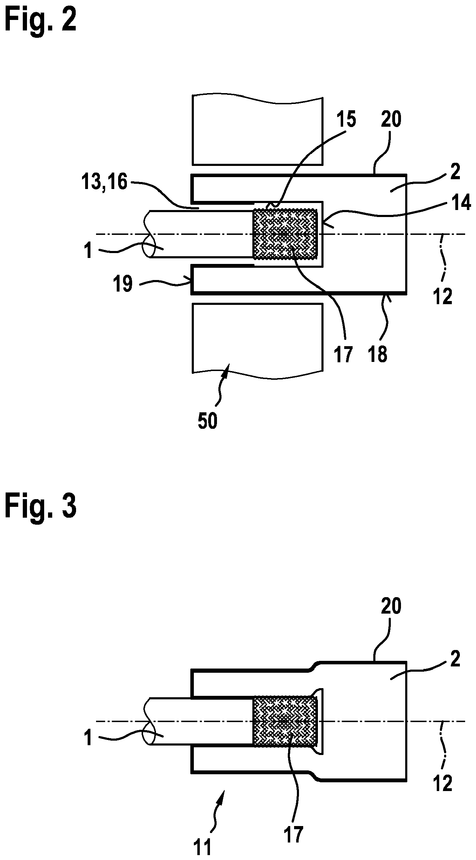

In der Fig. 2 ist bei einem ersten Ausführungsbeispiel der Erfindung der Verbindungsbereich 11 zwischen einem Pluspol 1 und einer ersten Batteriezelle 10 und dem Minuspol 2 einer zweiten Batteriezelle 10 näher dargestellt. Dabei wird lediglich beispielhaft und somit nicht einschränkend davon ausgegangen, dass der Pluspol 1 aus Kupfer besteht, während der Minuspol 2 aus Aluminium besteht. Sowohl der Pluspol 1 als auch der Minuspol 2 sind im dargestellten Ausführungsbeispiel im Verbindungsbereich 11 rotationssymmetrisch zu einer Längsachse 12 ausgebildet. Der Pluspol 1 ist in Form eines Stiftes ausgebildet, während der Minuspol 2 auf der dem Pluspol 1 zugewandten Seite kappenförmig mit einer Aufnahme 13 ausgebildet ist, in die das Ende des Pluspols 1 einführbar ist. Insbesondere im Bereich der Aufnahme 13 ist der Minuspol 2 somit, mit Ausnahme eines stirnseitigen Bodenbereichs 14, hülsenförmig ausgebildet. Die im Bereich der Aufnahme 13 radial umlaufende Wand 15 des Minuspols 2 umfasst den Pluspol 1 vorzugsweise mit einem zumindest in etwa gleichförmig ausgebildeten Umfangsspalt 16.

Es liegt auch im Rahmen der Erfindung, in Abänderung zu dem dargestellten Ausführungsbeispiel den Pluspol 1 sowie den Minuspol 2 im Verbindungsbereich 11 in ihrer Form abzuwandeln, wobei die abgewandelten Formen beispielsweise das Fügen und Ausrichten des Pluspols 1 zum Minuspol 2 erleichtern kann. Beispielsweise können der Pluspol 1 bzw. der Minuspol 2 auch eine rechteckige oder ovale Form aufweisen.

Im dargestellten Ausführungsbeispiel weist der Pluspol 1 innerhalb der Aufnahme 13 auf der dem Bodenbereich 14 zugewandten Seite eine Formschlussgeometrie in Form einer Rändelung 17 auf, die sich in etwa über die Hälfte der Länge der Aufnahme 13 hinweg erstreckt. Darüber hinaus ist der aus Aluminium bestehende Minuspol 2 zumindest im Bereich seiner Außenseite 18, seiner dem Pluspol 1 zugewandten Stirnseite 19, sowie im Bereich der Aufnahme 13 bis in axialer Höhe der Rändelung 17 mit einer Beschichtung 20 versehen, die dem Korrosionsschutz dient. Die Beschichtung 20 kann dabei beispielsweise aus Kunststoff, Metall oder Keramik bestehen. Die Beschichtung 20 kann bis zum Bereich des Zellengehäuses der Batteriezelle 10 fortgeführt ausgebildet sein. Darüber hinaus kann wenigstens einer der beiden Pole, zumindest im Verbindungsbereich 11, mit einer zusätzlichen metallischen Beschichtung versehen sein, um die Kontakteigenschaften bzw. den elektrischen Übergangswiderstand zu optimieren. Der Verbindungsbereich 11 ist in Wirkverbindung mit einer lediglich symbolhaft dargestellten, ringförmigen (Fertigungs-) Einrichtung 50 zum Ausbilden eines Magnetimpuls-Schweißverfahrens angeordnet.

In der Fig. 3 ist der Zustand dargestellt, nachdem die Einrichtung 50 betätigt und die Verbindung zwischen dem Pluspol 1 und dem Minuspol 2 ausgebildet wurde. Hierbei wird der Minuspol 2 im Bereich der Aufnahme 13 radial deformiert bzw. eingeschnürt, derart, dass dieser unter Ausbildung einer Crimpverbindung (im Bereich der Rändelung 17) und/oder einer Kaltschweißverbindung und/oder einer Ausbildung einer Mischform zwischen einer Kaltschweißverbindung und einer Crimpverbindung mit dem Pluspol 1 verbunden ist. Die Ausbildung der jeweiligen Verbindung wird dabei insbesondere durch die Auswahl der entsprechenden Parameter der Einrichtung 50 sowie die Geometrie des Pluspols 1 und des Minuspols 2 bestimmt.

Die Ausbildung der Aufnahme 13 an dem Minuspol 2 kann entweder dadurch erfolgen, dass die Aufnahme 13 integraler Bestandteil des Minuspols 2 bzw. des entsprechenden Bereichs des Zellengehäuses der Batteriezelle 10 ist, wie dies anhand der Fig. 2 und 3 dargestellt ist.

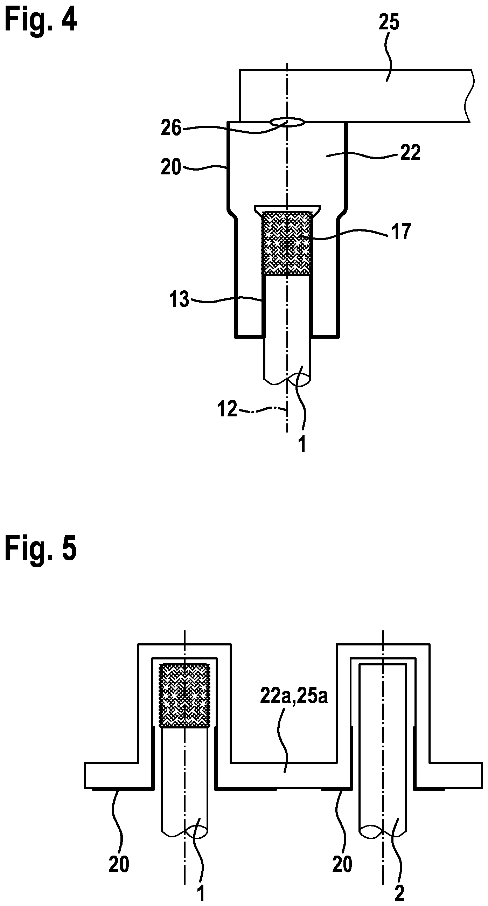

In der Fig. 4 ist demgegenüber der nicht-erfindungsgemäße Fall dargestellt, bei dem die Aufnahme 13 an einem separaten Bauteil 22 ausgebildet ist. Das Bauteil 22 besteht vorzugsweise aus Aluminium und ist insbesondere wirtschaftlich vorteilhaft als Fließpressteil herstellbar. Das Bauteil 22 ist wiederum mit einem Zellverbinder 25 verbunden. Wesentlich dabei ist, dass das Material des Bauteils 22 dem Material des Zellverbinders 25 entspricht bzw. dass die beiden Bauteile aus artgleichen Werkstoffen bestehen, so dass zwischen dem Bauteil 22 und dem Zellverbinder 25 auf einfache Weise eine Schweißverbindung 26, zum Beispiel durch Laserschweißen oder Ultraschallschweißen, gebildet werden kann. Der Zellverbinder 25 ist wiederum auf der dem Bauteil 22 abgewandten Seite mit dem Minuspol 2 verbunden, vorzugsweise ebenfalls durch eine entsprechende Schweißverbindung (nicht dargestellt). Hierzu entspricht das Material des Minuspols 2 dem Material des Zellverbinders 25.

Herstellungstechnisch lässt sich die in der Fig. 4 dargestellte Anordnung besonders vorteilhaft gestalten, wenn die Verbindung zwischen dem einen Pol und dem Bauteil 22, beispielsweise dem Pluspol 1 und dem Bauteil 22, vorab in einem ersten Schritt erfolgt, so dass das Bauteil 22 und der Pluspol 1 eine vorgefertigte Baueinheit ausbilden. Diese Baueinheit kann dann in einem zweiten Fertigungsschritt mit dem Zellverbinder 25 verschweißt werden, der wiederum vorab, gleichzeitig oder anschließend mit dem Minuspol 2 verschweißt wurde bzw. verschweißt wird.

In der Fig. 5 ist eine weitere nicht-erfindungsgemäße Abwandlung dargestellt. Hierbei erkennt man einen Minuspol 1 und einen Pluspol 2 zweier unterschiedlicher, miteinander zu verbindender Batteriezellen 10. Die beiden Pole sind mittels eines separaten Bauteils 22a miteinander verbunden, das gleichzeitig einen Zellverbinder 25a ausbildet. Das Material des Bauteils 22a ist artgleich zum Material des Minuspols 2, so dass zwischen dem Bauteil 22a und dem Minuspol 2 auf einfache Art und Weise eine Schweißverbindung ausgebildet werden kann (nicht dargestellt). Weiterhin ist das Bauteil 22a im Bereich der beiden Pole jeweils kappenförmig ausgebildet. Im Anschlussbereich der beiden Pole weist das Bauteil 22a jeweils eine Beschichtung 20 auf.

Die soweit beschriebene, erfindungsgemäße Verbindungstechnologie zwischen dem Pluspol 1 einer ersten Batteriezelle 10 und dem Minuspol 2 einer zweiten Batteriezelle 10 kann in vielfältiger Art und Weise abgewandelt bzw. modifiziert werden, ohne vom Erfindungsgedanken und im Rahmen der beigefügten Ansprüche abzuweichen.

## Patentansprüche

1. Verfahren zum Verbinden zweier aus ungleichen Materialien bestehenden Batteriepolen (1, 2) zweier Batteriezellen (10) mittels einer stoff- und/oder kraft- und/oder formschlüssigen Verbindung,
**dadurch gekennzeichnet,**
**dass** in einem Verbindungsbereich (11) der eine, erste Batteriepol (2) eine Aufnahme (13) für einen Endbereich des anderen, zweiten Batteriepols (1) aufweist, und die beiden Batteriepole (1, 2) in dem Verbindungsbereich (11) zumindest mittelbar mittels einer Magnetimpuls-Schweißverbindung, miteinander verbunden werden.

2. Verfahren nach Anspruch 1,
**dadurch gekennzeichnet,**
**dass** die Verbindung als reine Crimpverbindung, als reine Schweißverbindung oder als eine Mischfom zwischen einer Crimpverbindung und einer Schweißverbindung ausgebildet wird.

3. Batterieeinheit (100), umfassend wenigstens zwei Batteriezellen (10), bei denen die Batteriepole (1, 2) der Batteriezellen (10), welche aus ungleichen Materialien bestehen, in einem Verbindungsbereich (11) miteinander verbunden sind nach einem Verfahren nach Anspruch 1 oder 2,
**dadurch gekennzeichnet,**
**dass** in dem Verbindungsbereich (11) der eine, erste Batteriepol (2) eine Aufnahme (13) für einen Endbereich des anderen, zweiten Batteriepols (1) aufweist, und dass die Aufnahme (13) des ersten Batteriepols (2) den zweiten Batteriepol (1) zumindest bereichsweise, vorzugsweise radial, umfasst.

4. Batterieeinheit nach Anspruch 3,
**dadurch gekennzeichnet,**
**dass** der erste Batteriepol (2), zumindest im Verbindungsbereich (11), aus einem gegenüber dem Material des zweiten Batteriepols (1) weicherem Material besteht.

5. Batterieeinheit nach Anspruch 3 oder 4,
**dadurch gekennzeichnet,**
**dass** der zweite Batteriepol (1) in dem mit der Aufnahme (13) zusammenwirkenden Bereich zumindest bereichsweise eine Formschlussgeometrie, insbesondere in Form einer Rändelung (17) oder Riffelung, aufweist.

6. Batterieeinheit nach einem der Ansprüche 3 bis 5,
**dadurch gekennzeichnet,**
**dass** zumindest einer der Batteriepole (1, 2) zumindest im Verbindungsbereich (11) mit einer vorzugsweise korrosionshemmenden und/oder metallischen Beschichtung (20), insbesondere enthaltend Kunststoff, Metall oder Keramik, versehen ist.

7. Batterieeinheit nach einem der Ansprüche 3 bis 6,
**dadurch gekennzeichnet,**
**dass** der erste Batteriepol (2) im Verbindungsbereich (11) kappenförmig ausgebildet ist und vorzugsweise aus Aluminium besteht.

## Claims

1. Method for connecting two battery poles (1, 2), consisting of different materials, of two battery cells (10) by means of a material bond and/or force-fitted connection and/or form fitted connection,
**characterized in that**,
in a connection region (11), the one, first battery pole (2) has a receptacle (13) for an end region of the other, second battery pole (1), and the two battery poles (1, 2) are connected to one another in the connection region (11) at least indirectly by means of a magnetic pulse welded connection.

2. Method according to Claim 1,
**characterized in that**
the connection is in the form of a purely crimped connection, a purely welded connection, or a mixed form of a crimped connection and a welded connection.

3. Battery unit (100), comprising at least two battery cells (10), in the case of which the battery poles (1, 2) of the battery cells (10), which consist of different materials, are connected to one another in a connection region (11) by a method according to Claim 1 or 2, **characterized in that**,
in the connection region (11), the one, first battery pole (2) has a receptacle (13) for an end region of the other, second battery pole (1), and **in that** the receptacle (13) of the first battery pole (2) encloses the second battery pole (1) at least in certain regions, preferably radially.

4. Battery unit according to Claim 3,
**characterized in that**
the first battery pole (2), at least in the connection region (11), consists of a material which is softer than the material of the second battery pole (1).

5. Battery unit according to Claim 3 or 4, **characterized in that**
the second battery pole (1), at least in certain regions, has a form-fit geometry, in particular in the form of a knurling (17) or fluting, in the region that interacts with the receptacle (13).

6. Battery unit according to one of Claims 3 to 5, **characterized in that**
at least one of the battery poles (1, 2), at least in the connection region (11), is provided with a preferably corrosion-inhibiting and/or metallic coating (20), in particular containing plastic, metal or ceramic.

7. Battery unit according to one of Claims 3 to 6, **characterized in that**
the first battery pole (2), in the connection region (11), has a cap-shaped form and preferably consists of aluminium.

## Revendications

1. Procédé pour relier deux pôles de batterie (1, 2), constitués de matériaux différents, de deux cellules de batterie (10) au moyen d'une liaison par matière et/ou par force et/ou par complémentarité de forme, **caractérisé en ce que**
dans une zone de liaison (11), le premier pôle de batterie (2) présente un logement (13) pour une zone d'extrémité de l'autre deuxième pôle de batterie (1), et les deux pôles de batterie (1, 2) sont reliés l'un à l'autre dans la zone de liaison (11) au moins indirectement au moyen d'une liaison par soudage à impulsion magnétique.

2. Procédé selon la revendication 1, **caractérisé en ce que** la liaison est réalisée sous la forme d'une liaison par sertissage pur, sous la forme d'une liaison par soudage pur ou sous une forme mixte entre une liaison par sertissage et une liaison par soudage.

3. Unité de batterie (100), comprenant au moins deux cellules de batterie (10), dans laquelle les pôles de batterie (1, 2) des cellules de batterie (10), qui sont constitués de matériaux différents, sont reliés l'un à l'autre dans une zone de liaison (11) par un procédé selon la revendication 1 ou 2,
**caractérisée en ce que**
dans la zone de liaison (11), le premier pôle de batterie (2) présente un logement (13) pour une zone d'extrémité de l'autre deuxième pôle de batterie (1), et **en ce que** le logement (13) du premier pôle de batterie (2) entoure le deuxième pôle de batterie (1) au moins par zones, de préférence radialement.

4. Unité de batterie selon la revendication 3, **caractérisée en ce que** le premier pôle de batterie (2), au moins dans la zone de liaison (11), est constitué d'un matériau plus souple que le matériau du deuxième pôle de batterie (1).

5. Unité de batterie selon la revendication 3 ou 4, **caractérisée en ce que** le deuxième pôle de batterie (1) présente, dans la zone coopérant avec le logement (13), au moins par zones, une géométrie de complémentarité de forme, notamment sous la forme d'un moletage (17) ou d'une cannelure.

6. Unité de batterie selon l'une quelconque des revendications 3 à 5, **caractérisée en ce qu'**au moins l'un des pôles de batterie (1, 2) est pourvu, au moins dans la zone de liaison (11), d'un revêtement (20) de préférence anticorrosif et/ou métallique, contenant notamment du plastique, du métal ou de la céramique.

7. Unité de batterie selon l'une quelconque des revendications 3 à 6, **caractérisée en ce que** le premier pôle de batterie (2) est réalisé en forme de capuchon dans la zone de liaison (11) et est de préférence constitué d'aluminium.
